Europäisches Patentamt

European Patent Office

Office européen des brevets

(19)

(11) Veröffentlichungsnummer: **0 264 477 B1**

# EUROPÄISCHE PATENTSCHRIFT

(12)

(45) Veröffentlichungstag der Patentschrift: **17.06.92**

(51) Int. Cl.5: **B23D 37/00**, B23Q 1/24

(21) Anmeldenummer: **86114634.8**

(22) Anmeldetag: **22.10.86**

(54) **Verfahren zur Drehräumen von biegungs- oder schwingungsempfindlichen Werkstücken und Maschine hierzu.**

(43) Veröffentlichungstag der Anmeldung:
**27.04.88 Patentblatt 88/17**

(45) Bekanntmachung des Hinweises auf die
Patenterteilung:
**17.06.92 Patentblatt 92/25**

(84) Benannte Vertragsstaaten:
**AT DE FR GB IT**

(56) Entgegenhaltungen:
**CH-A- 230 535**
**DD-A- 138 745**
**DE-A- 1 477 265**
**FR-A- 1 403 313**

**MASCHINENMARKT, Band 92, Nr. 34, August
1986, Seiten 24-28, Würzburg; M. MÜLLER et
al.: "Zerspankraft kompensieren"**

(73) Patentinhaber: **Wilhelm Hegenscheidt Gesellschaft mbH
Neusser Strasse 3
W-5140 Erkelenz(DE)**

(72) Erfinder: **Berstein, Garri, Dr.-Ing.
Charles de Gaulle-Strasse 2
W-5140 Erkelenz(DE)**
Erfinder: **Obrig, Hans W., Dr.-Ing.
Gillhausenstrasse 5
W-4300 Essen(DE)**

(74) Vertreter: **Liermann, Manfred
Schillingsstrasse 335
W-5160 Düren(DE)**

## Beschreibung

Die Erfindung betrifft gemäß Oberbegriff von Patentanspruch 1 ein Verfahren zum Drehräumen von biegungs-oder schwingungsempfindlichen Werkstücken sowie gemäß Oberbegriff von Patentanspruch 8 eine Maschine zur Durchführung des Verfahrens.

Die Bearbeitung von biegungsempfindlichen oder schwingungsempfindlichen Werkstücken durch Drehräumen bereitet große Schwierigkeiten, weil die Drehräumwerkzeuge während der Bearbeitung sowohl eine beträchtliche Radialkraft, als auch eine beträchtliche Tangentialkraft auf das Werkstück ausüben und dieses damit durchbiegen. Dieses Problem tritt insbesondere bei der Drehräumbearbeitung langer Kurbelwellen auf. Die genannte Problematik ist angesprochen in dem Aufsatz "Zerspankraft kompensieren" in der Zeitschrift "Maschinenmarkt (1986) Nr. 34, Seite 28, Bild 8, mittlere Spalte und zugehöriger Text, rechte Spalte. Bild 8 zeigt die Bearbeitung einer Kurbelwelle durch sog. Rotations-Drehräumwerkzeuge, wobei die genannten Werkzeuge symetrisch verteilt in Umfangsrichtung um den zu bearbeitenden Kurbelwellenzapfen angeordnet sind. Alle drei Werkzeuge bearbeiten gleichzeitig diesen Kurbelwellenzapfen. Im zugehörigen Text ist ausgesagt: "Die Grenzen des Verfahrens sind dort zu sehen, wo infolge Durchbiegung des Werkstückes aufgrund der Zerspankraft und der Massenkräfte die benötigten Toleranzen nicht mehr eingehalten werden können. Maßnahmen, um diese Grenzen möglichst weit zu stecken, können auf Werkzeug- und Maschinenseite getroffen werden. Bild 8 zeigt eine Anordnung, bei der die gesamte Zahl der Werkzeugschneiden auf drei Segmente aufgeteilt ist. Bei sinnvoller Anordnung der einzelnen Wendeplatten auf den jeweiligen Grundkörpern können bei dieser Konfiguration die auf die Kurbelwelle wirkende resultierende Zerspankraft und die Massenkräfte kompensiert werden. Mit der Konstruktion (Bild 8) ist es möglich, auch labile Werkstücke zu bearbeiten, bei denen Drehräumen bisher nicht möglich war.

Die beschriebene Konstruktion des nächstkommenden Standes der Technik zur Bearbeitung labiler Werkstücke erfordert die Konstruktion einer ganz speziell für diesen Zweck ausgestalteten Maschine, die nur sinnvoll für sehr große Serien ganz spezieller Werkstücke ist. Die Maschine ist nicht mehr umrüstbar für kleinere Werkstücke oder für andere Werkstückabmessungen. Darüber hinaus wird das Werkstück für den Werkstückwechsel aufgrund der Werkzeugbehinderung schwer zugänglich. Erschwerend kommt hinzu, daß durch die gleichzeitige Verwendung von drei Werkzeugen hohe Werkzeugkosten entstehen und dennoch keine größere Zerspanungsleistung erreicht wird, weil die Zerspanungsleistung ja von dem über das Werkstück selbst übertragbaren Drehmoment und nicht von der Leistungsfähigkeit der Werkzeuge abhängt.

Eine weitere Schwierigkeit dieser Konstruktion des Standes der Technik ist darin zu sehen, daß es unmöglich ist, alle drei Werkzeuge exakt gleichzeitig und mit gleicher Zerspanungsleistung anschneiden zu lassen. Die Folge hiervon ist, daß während des Anschnittes das Werkstück stark rüttelt, wodurch die Gefahr besteht, daß sowohl das Werkstück, als auch die Werkzeuge zerstört werden. Insbesondere bei der Bearbeitung von Kurbelwellen tritt bei der beschriebenen Konstruktion des Standes der Technik ein weiterer Nachteil auf. Die zu bearbeitenden Kurbelwellen kommen als Rohlinge an und sind nicht ausreichend genau ausgewuchtet. Die während der Drehung des Werkstücks radial gerichteten resultierenden Massenkräfte der Kurbelwellen sorgen für eine umlaufende Radialkraft, wodurch als Folge und Reaktionskraft an den einzelnen Werkzeugen periodisch unterschiedliche Schnittkräfte und Radialkräfte entstehen. Die Folge hiervon ist unkontrollierte Vibration des Werkstückes und der Werkzeuge sowie unbefriedigende Oberflächenqualität und Formgenauigkeit des Werkstückes.

Der Erfindung liegt somit die Aufgabe zugrunde, ein Verfahren der eingangs beschriebenen Art vorzuschlagen, das eine sichere Bearbeitung eines labilen Werkstückes erlaubt bei einseitig angesetzten Werkzeugen und das gleichzeitig eine einfache Maschinengestaltung ermöglicht. Weiterhin soll eine geeignete Maschine zur Durchführung des Verfahrens vorgeschlagen werden.

Erfindungsgemäß ist diese Aufgabe verfahrensmäßig dadurch gelöst, daß an mindestens einer Stelle des Werkstückes von einem Drehräumwerkzeug zunächst ein Lünettensitz angeformt wird, worauf eine zugeordnete Lünette mit ihren Stützelementen angelegt und nachfolgend das Drehräumwerkzeug die Drehräumbearbeitung fortsetzt wird, wobei die Anformung des Lünettensitzes mindestens solange mit mindestens verlangsamter Schnittgeschwindigkeit und/oder verringertem Vorschub erfolgt, bis die Stützelemente angelegt sind. Hierdurch gelingt es, einen Rohling so vorzubearbeiten, daß eine Lünette angelegt werden kann, wodurch es ebenfalls erstmals im Bereich einer Drehräumbearbeitung gelingt ein labiles Werkstück so zu stabilisieren, daß eine Drehräumbearbeitung wirtschaftlich sinnvoll möglich ist. Hierbei kann ein Rohling zunächst so vorsichtig vorgearbeitet werden, daß eine Schwingungs- oder Durchbiegungsgefahr nicht besteht. Nach Abschluß dieser Vorarbeit kann dann die Lünette angelegt werden und es kann mit normaler Maschinenleistung fertig bearbeitet werden.

Es wird weiter vorgeschlagen, daß nach Anformung des Lünettensitzes dieser weiterbearbeitet wird und die Stützelemente dem kleiner werdenden Lünettensitz nachgeführt werden. Es kann dann, wenn die Lünette am vorbearbeiteten Bereich anliegt, dieser vorbearbeitete Bereich vom Drehräumwerkzeug fertig bearbeitet werden, bei gleichzeitiger weiterer Anlage der Lünette. Das Werkstück bleibt hierdurch ständig abgestützt und wird darüberhinaus vorteilhafterweise direkt im Bereich der auftretenden Querkräfte, die vom Werkzeug in das Werkstück eingebracht werden, abgestützt. Diese Vorgehensweise ist besonders vorteilhaft bei der Bearbeitung von Kurbelwellen, weil hierdurch die Lünette am Lagersitz, der gleichzeitig vom Drehräumwerkzeug bearbeitet wird, abgestützt wird. Während der Anlage der Lünette wird der zugeordnete Lagersitz ungehindert vom Drehräumwerkzeug fertig bearbeitet und die Lünette nachgeführt. Gleichzeitig kann durch die Verwendung einer Lünette sowohl in der Form als starre Lünette als auch in der Form als nachgeführte Lünette die Anordnung von mehreren am Umfang verteilt angeordneten und gleichzeitig am Werkstück arbeitenden Werkzeugen vermieden werden. Damit wird auch der zugehörige konstruktive Aufwand für eine Sondermaschine vermieden und es werden die hohen Werkzeugkosten vermieden. Eine Maschine zur Durchführung dieses Verfahrens kann mit einseitig angeordneten Werkzeugen arbeiten Hierbei können diese Werkzeuge auch auf unterschiedliche axiale Positionen umgerüstet werden. Eine Anpassung an unterschiedliche axiale Positionen der zu bearbeitenden Stellen am Werkstück kann in einfacher Weise auch dadurch erfolgen, daß die Lünette in axialer Richtung an der Maschine verfahrbar angeordnet ist. Insgesamt gelingt es bei diesem Verfahren, Maschinen zu verwenden, die in ihrem konstruktiven Aufbau einfach gehalten werden können.

In weiterer Ausgestaltung der Erfindung ist vorgeschlagen, daß durch die fortgesetzte Drehräumbearbeitung im Bereich des Lünettensitzes ein weiterer Lünettensitz angeformt wird, wonach Stützelemente an diesen weiteren Lünettensitz angelegt werden. Diese Vorgehensweise ist besonders vorteilhaft bei der Bearbeitung der Lagestellen von Kurbelwellen. Es kann hierbei von einem vorgearbeiteten Bereich auf einen anderen vorgearbeiteten Bereich stufenlos die Abstützung übergeben werden. Hierdurch wird es z. B. möglich an frühzeitig bearbeiteten Oberflächen zunächst abzustützen und die Abstützung auf andere nachfolgend bearbeitete Oberflächenbereiche stufenlos zu übergeben, wenn diese frühzeitig bearbeiteten Oberflächen im Verlaufe der Bearbeitung vollständig verschwinden.

Es ist daher auch ergänzend vorgeschlagen, daß mindestens während einer kurzen Übergangsphase Stützelemente sowohl am zuerst angeformten als auch am weiteren Lünettensitz anliegen. Hierdurch wird ein stufenloser und ruckfreier Übergang gewährleistet. Zunächst übernimmt der zuerst angeformte Lünettensitz die gesamte Abstützung. Im Laufe der Weiterbearbeitung kommen die Stützelemente zunächst ohne Stützkraft zur Anlage am weiteren Lünettensitz. Mit fortschreitender Bearbeitung am zuerst angeformten Lünettensitz wandert die entsprechende Stützfläche radial immer weiter nach innen, wodurch zunehmend Stützlast auf den weiteren Lünettensitz übertragen wird, bis dieser schließlich die gesamte Stützlast trägt, weil der zuerst angeformte Lünettensitz entsprechend weit abgearbeitet ist.

Auch wird nach der Erfindung vorgeschlagen, daß zunächst zwei ringförmige Flächen und eine im Durchmesser kleinere, zwischen den genannten Flächen angeordnete weitere ringförmige Fläche angeformt und Stützelemente an die erstgenannten ringförmigen Flächen angelegt werden, bevor die weitere Drehräumbearbeitung erfolgt. Hierdurch werden von Anfang an unterschiedliche Stützflächen geschaffen, die später eine stufenlose Übertragung der Stützlast von einer Stützfläche auf die andere ermöglichen.

Ergänzend wird dann nach der Erfindung vorgeschlagen, daß die Anformung der mittleren ringförmigen Fläche nach dem Anlegen der Stützelement und mit normaler Bearbeitungsgeschwindigkeit erfolgt. Hierdurch kann ohne Verlust an Stützsicherheit Bearbeitungszeit eingespart werden.

Eine besondere Ausgestaltung der Erfindung sieht vor, daß die auf die Stützelemente in deren Bewegungsrichtung einwirkenden Komponenten der Schnittkraft ermittelt und die Stützelemente mit entsprechender Gegenkraft in Anlage am Lünettensitz gehalten werden. Hierdurch kann verhindert werden, daß z. B. die Stützelemente selbst aufgrund ihrer Stützkraft eine unerwünschte Durchbiegung des Werkstückes verursachen.

Zur Durchführung der erfindungsgemäßen Verfahrens wird ausgegangen von einer Drehräummaschine mit einer Einrichtung für die Aufnahme und den Drehantrieb eines durch Drehräumen zu bearbeitenden Werkstückes, mindestens einem in Arbeitskontakt mit dem Werkstück bringbaren Drehräumwerkzeugs, einer Einrichtung für den Antrieb des Drehräumwerkzeuges sowie mit einer Maschinensteuerung. Hierzu wird nach der Erfindung vorgeschlagen, daß an der Maschine mindestens eine Lünette mit an auf der Drehräum-Maschine vorbearbeitete Oberflächen des Werkstücks anlegbaren Stützelementen angeordnet ist wobei für die Bearbeitung im Bereich der Lünette am Umfang des Werkstückes nur ein Drehräumwerkzeug vorgesehen ist, wobei das Drehräumwerkzeug Schneidkanten aufweist zur Herstellung mindestens eines Lünettensitzes. Durch den Einsatz einer Lünette auf einer Drehräummaschine kann die im Stand der Technik notwendige und bereits beschriebene Mehrfachanordnung von Werkzeugen um das Werkstück herum vermieden werden. Vermieden werden damit auch die zum Stand der Technik bereits beschriebenen Nachteile des Standes der Technik. Erforderlich ist jedoch, daß die Lünette Stützelemente aufweist, die an entsprechend vorbearbeiteten Oberflächen der Werkstücke anlegbar sind. Solange solche Oberflächen sich in der Maschine in axial immer exakt gleicher Lage befinden, reicht es aus, wenn die Stützelemente der Lünette radial beweglich und damit in radialer Richtung anlegbar sind. Können die Oberflächen jedoch an axial unterschiedlichen Stellen von Werkstück zu Werkstück auftreten, ist es zusätzlich erforderlich, daß die Lünette axial positionierbar ist. Die genannten Stützelemente der Lünette werden dann dadurch an die vorbearbeitete Oberfläche anlegbar, daß die Lünette zunächst axial positioniert und danach die Stützelemente radial angelegt werden. Hierbei kommt es allerdings nicht darauf an, daß die Bewegung der Stützelemente radial ist. Vielmehr kommt es darauf an, daß die Stützelemente so angelegt werden, daß sie eine radial gerichtete Kraft auf die vorbearbeitete Oberfläche des Werkstückes ausüben.

Es ist weiter nach der Erfindung vorgeschlagen, daß das Drehräumwerkzeug Schneidkanten aufweist zur Herstellung mindestens eines Lünettensitzes. Hierdurch wird es möglich, einen vollständigen Rohling ohne irgendeine, auf eine Lünettenabstützung gerichtete Vorbearbeitung in die Drehräummaschine einzubringen. Die notwendige Abstützoberfläche wird dann in der Drehräummaschine vom entsprechend gestalteten Drehräumwerkzeug vorbearbeitet, so daß nach dieser Vorarbeitung eine entsprechend vorbearbeitete Oberfläche am Werkstück vorliegt, an welche die Stützelemente der Lünette angelegt werden können. Hierdurch können irgendwelche Maßnahmen sowie die zur Durchführung solcher Maßnahmen notwendigen Einrichtungen zur Herstellung der vorbearbeiteten Oberfläche außerhalb der Drehräummaschine entfallen.

In weiterer Ausgestaltung der Erfindung ist vorgeschlagen, daß für jedes Stützelemt Mittel zum Nachführen des Stützelementes mit vorbestimmter oder vorbestimmbarer Kraft vorgesehen sind. Hierdurch wird es möglich, die vorbearbeitete Oberfläche während der Anlage der Stützelemente ohne Behinderung weiter zu bearbeiten und schließlich fertig zu bearbeiten, ohne daß die notwendige Abstützung verloren geht.

Ergänzend ist dann nach der Erfindung vorgeschlagen, daß Mittel zur Einstellung oder Regelung der Kraft für die Stützelemente vorgesehen sind. Hierdurch kann eine Anpassung an die jeweils vorgesehene oder augenblickliche Zerspanungsleistung erfolgen.

Weiter ist nach der Erfindung vorgesehen, daß Mittel zur Ermittlung der Belastung des Werkstückes oder Werkzeuges vorgesehen sind, die mit der Maschinensteuerung verbunden sind, die ihrerseits mit den Mitteln zur Einstellung oder Regelung der Kraft für die Stützelemente verbunden ist. Hierdurch wird eine vollautomatische Anpassung der Stützkraft der Lünette an die jeweils aktuelle Werkstückbelastung möglich.

Ausgestaltend ist dann nach der Erfindung vorgeschlagen, daß die Mittel zum Nachführen der Stützelemente mit den Mitteln zur Einstellung oder Regelung der Kraft für die Stütz elemente verbunden sind, derart, daß alle Mittel zum Nachführen der Stützelemente gemeinsam und in gleicher Weise eingestellt oder geregelt werden. Hierdurch wird eine Beeinflussung der Stützkraft auf einfache Art und Weise möglich.

In alternativer Ausgestaltung ist vorgeschlagen, daß die einem Stützelement zugeordneten Mittel zum Nachführen jeweils unabhängig von den entsprechenden anderen Mitteln mit den Mitteln zur Einstellung oder Regelung der Kraft für die Stützelemente verbunden ist, derart, daß die jedem einzelnen Stützelement zugeordneten Mittel unabhängig von allen anderen eingestellt oder geregelt werden können. Hierdurch gelingt es, jedes einzelne Stützelement der Lünette in gewünschter oder notwendiger Weise zu beeinflussen. Dies kann notwendig werden, weil die Abstützung ja in einem Bereich erfolgen soll, in dem gleichzeitig ein zugeordnetes Werkzeug das Werkstück bearbeitet. Die Stützelemente der Lünette können daher das Werkstück nicht symetrisch vollständig umfassen, sondern können nur in einem Teilbereich des Umfangs des Werkstücks angelegt werden. Hierdurch kann es notwendig werden, die Kraft der einzelnen Stützelemente unterschiedlich zu halten und aktiv zu beeinflussen.

Es wird weiterhin nach der Erfindung vorgeschlagen, daß die Mittel zum Nachführen der Stützelemente als Strömungsmittelzylinder ausgebildet sind. Hierbei handelt es sich um einfach zu regelnde und bewährte Bauelemente.

Ergänzend wird dann nach der Erfindung vorgeschlagen, daß die Mittel zur Einstellung oder Regelung der Kraft für die Stützelemente als hydraulischer Schaltkreis für die Strömungsmittelzylinder ausgebildet sind. Die Regelung der Bewegungsgeschwindigkeit und der Kraft von Strömungsmittelzylindern ist bekannt. Dies gilt ebenfalls für die hierzu notwendigen Bauelemente. Bei der Verwendung von Strömungsmittelzylindern mit den entsprechenden genannten hydraulischen Schaltkreisen zur Regelung dieser Strömungsmittelzylinder wird daher eine einfach aufgebaute und einfach überschaubare funktionsfähige Baugruppe vorgeschlagen, die mit bewährten Bauelementen herstellbar ist.

Schließlich ist dann nach der Erfindung noch vorgeschlagen, daß ein hydraulischer Schaltkreis für alle Zylinder gemeinsam oder für jeden einzelnen Zylinder vorgesehen ist.

Die Erfindung soll nun anhand der Zeichnungen, die ein Ausführungsbeispiel zeigen, näher erläutert werden.

Es zeigen:

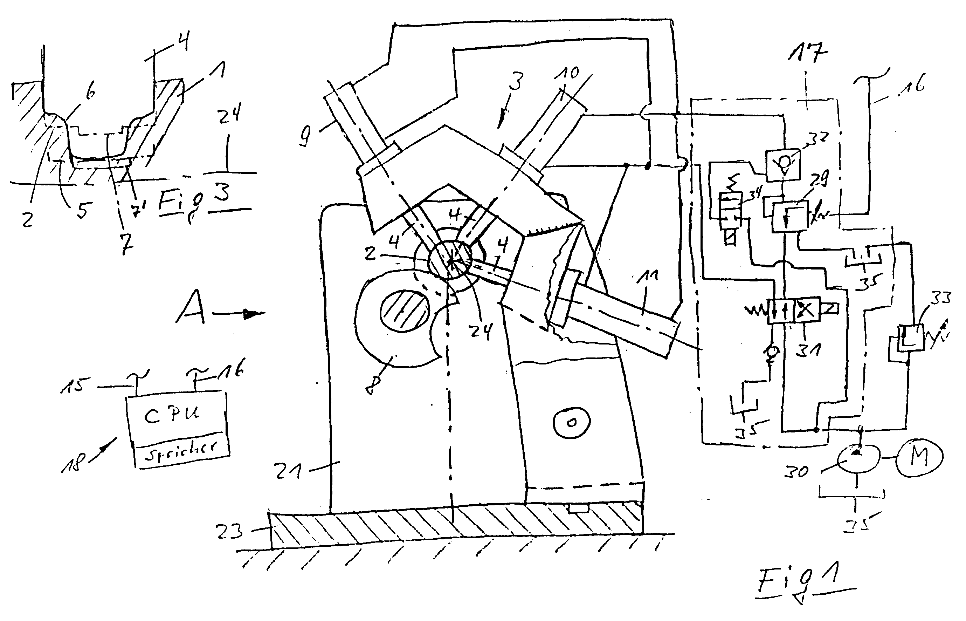

Figur 1: Drehräummaschine im Schnitt entlang der Linie I-I nach Figur 2 mit hydraulischem Schaltkreis und Maschinensteuerung

Figur 2: Ansicht in Richtung des Pfeils A nach Figur 1

Figur 3: Querschnitt durch einen zu bearbeitenden Rohlingsbereich in dem abgestützt werden soll.

Auf einem sich an einem Fundament abstützenden Maschinenbett 23 sind in sich gegenüberliegender Anordnung Spindelstöcke 21 und 22 angeordnet, mit nicht näher bezeichneten, angetriebenen Spindeln, zwischen denen ein Werkstück 1 eingespannt ist. Werkstück 1 kann von den Spindeln sowohl gespannt, als auch angetrieben werden. Der Antrieb erfolgt hierbei um die Drehachse 24.

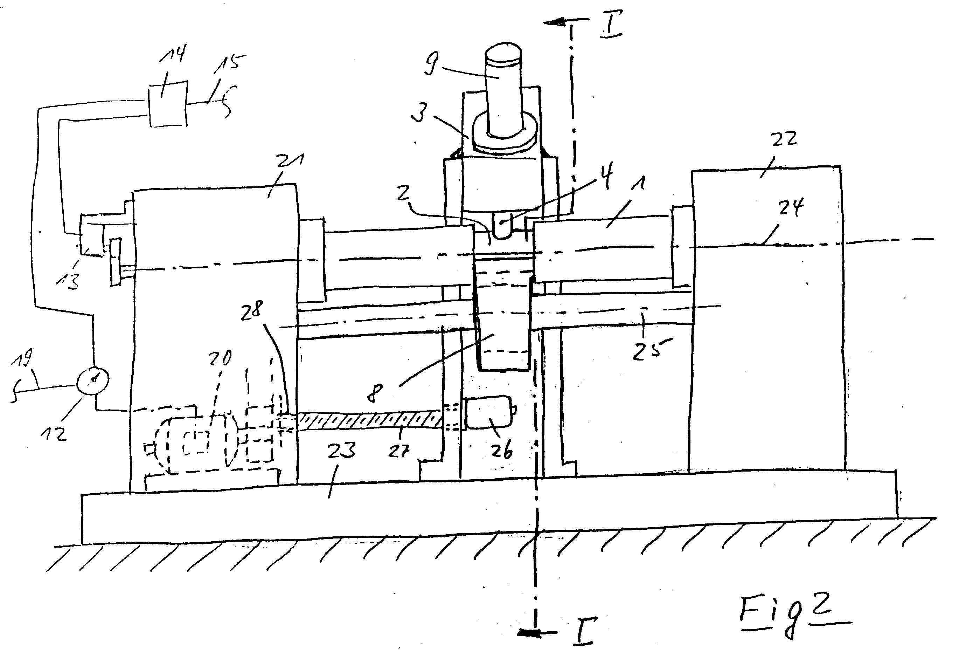

Die Bearbeitung des Werkstückes 1 erfolgt durch ein Drehräumwerkzeug 8, das mindestens drehfest auf einer Antriebswelle 25 in der notwendigen axialen Position angeordnet ist. Die Antriebswelle 25 kann das Drehräumwerkzeug 8 mindestens mit Vorschubgeschwindigkeit drehen. Der entsprechende Antrieb für die Antriebswelle 25 ist nicht dargestellt. Es ist jedoch darauf zu achten, daß die Antriebswelle 25 so dicht am Drehräumwerkzeug 8 abgestützt oder gelagert ist, daß eine unzulässige Durchbiegung dieser Antriebswelle 25 aufgrund der Bearbeitungskräfte nicht entsteht. Auf die Darstellung einer entsprechenden Werkzeuglagerung ist in Figur 2 aus Gründen der Übersichtlichkeit verzichtet worden.

Auf dem Maschinenbett 23 ist weiter eine Lünette 3 angeordnet, die im Ausführungsbeispiel drei Stützelemente 4 aufweist. Die Stützelemente 4 können vo n nicht näher bezeichneten Kolbenstangen von Strömungsmittelzylindern 9, 10 und 11 in geeigneter Anordnung an der Lünette 3 getragen und bewegt werden. Die Strömungsmittelzylinder 9, 10 und 11 sind zu ihrer Betätigung und Regelung verbunden mit einem hydrau lischem Schaltkreis 17, der in seinem Aufbau noch beschrieben wird.

Die Lünette 3 weist weiter einen Motor 26 auf, der eine Gewindespindel 27 antreiben kann. Die Gewindespindel 27 wirkt zusammen mit einer am Spindelstock 21 ortsfest vorgesehenen Mutter 28. Wird über den Motor 26 die Spindel 27 gedreht, so wird hierdurch die Lünette 3 abhängig von der Drehrichtung der Spindel 27 auf dem Maschinenbett in Richtung der Drehachse 27 verschoben.

Es ist weiter eine Maschinensteuerung 18 vorgesehen, die in üblicher Weise für die Steuerung der Maschine und der einzelnen notwendigen Bearbeitungsabläufe sorgt. Die Maschinensteuerung 18 weist einen zentralen Rechner (CPU) und einen zugeordneten Datenspeicher auf. Dieser Rechner ist über die Leitung 15 mit einer Auswerteeinrichtung 14 verbunden, die ihrerseits mit einem Drehmelder 13 und mit einem Leistungsaufnehmer 12 verbunden ist. Der Leistungsaufnehmer 12 ermittelt die Leistungsaufnahme des Motors 20, mit dem die Werkstückspindel angetrieben wird. Der Drehmelder 13 ermittelt gleichzeitig die Drehzahl der Werkstückspindel. Aus beiden Daten kann in der Auswerteeinrichtung 14 die Werkstückbelastung ermittelt und über die bereits genannte Leitung 15 der Maschinensteuerung 18 und dem darin integrierten Rechner zugeführt werden. Da der Maschinensteuerung 18 gleichzeitig die Anordnung des Werkzeuges 8 und die Winkellage der Stützelemente 4 der Lünette relativ zueinander und zum Werkzeug 8 bekannt ist, kann der Rechner der Maschinensteuerung 18 die notwendige Stützkraft für die Stützelemente 4 errechnen und über die Steuerleitung 16 ein Druckregelventil 29 im hydraulischen Schaltkreis 17 so beeinflussen, daß die Stützelemente 4 mit entsprechender Kraft an einen vorbearbeiteten Lünettensitz 2 am Werkstück 1 angelegt werden. Hierzu wird über eine von einem Motor angetriebene Hydraulikpumpe 30 Drucköl über ein Ventil 31 und von dort über das Druckregelventil 29 und über ein entsperrbares Rückschlagventil 32 den Zylindern, 9, 10 und 11 auf der der Kolbenstange abgewandten Seite des Zylinderraumes zugeführt. Die Hydraulikpumpe 30 ist hierbei über ein Druckbegrenzungsventil 33 gesichert. In beschriebener Weise werden damit die Stützelemente 4 mit der am Druckregelventil 29 vorgewählten Kraft am Lünettensitz 2 angelegt. Hierdurch wird eine entsprechende Gegenkraft, die vom Werkstück auf die Stützelemente 4 übertragen wird, kompensiert. Ist die vom Werkstück 1 auf die Stützelemente übertragene Kraft größer als die Kraft, die vom Druckregelventil 29 vorgegeben ist, so wird ein Ausweichen der Stützelemente 4 durch das Rückschlagventil 32 verhindert, so daß sich bei den Stützelementen 4 sofort eine entsprechend vergrößerte Gegenkraft aufbaut.

Es kann aber auch wünschenswert sein, diese sehr schnelle und harte Reaktion der Stützelemente 4 zu verhindern und statt dessen auf ein Anwachsen der vom Werkstück 1 auf die Stützelemente 4 ausgeübten Kraft mit einer Nachregelung am Druckregelventil 29 oder in sonstiger Weise aktiv und weich zu reagieren. Hierzu kann das Ventil 34 über die Maschinensteuerung 18 in die Durchgangsstellung geschaltet werden, wodurch das entsperrbare Rückschlagventil 32 entsperrt wird, so daß ein Rückfluß des Strömungsmediums aus den Zylindern 9, 10 und 11 möglich ist. Ein solcher Rückfluß in den Tank 35 erfolgt jedoch erst dann, wenn die vom Druckregelventil 29 vorgegebene Einstellung für den Druck des Drucköls überschritten wird. In diesem Fall öffnet das Druckregelventil 29 eine Leitung in den Tank 35. Hierdurch ist gewährleistet, daß die Stützelemente 4 immer mit einer Kraft entsprechend der Einstellung am Druckregelventil 29 belastet werden. Dies gilt auch dann, wenn das Druckregelventil 29 von der Maschinensteuerung 18 permanent in seiner Einstellung gere gelt wird.

Der gesamte hydraulische Schaltkreis 17 ist im Ausführungsbeispiel gemeinsam für alle Strömungsmittelzylinder 9, 10 und 11 vorgesehen. Für eine individuelle Regelung der einzelnen Strömungsmittelzylinder 9, 10 und 11 ist es möglich, für jeden dieser Zylinder einen solchen hydraulischen Schaltkreis 18 vorzusehen.

Zur Bearbeitung wird ein Werkstück 1 als Rohling von der Maschine aufgenommen und es wird durch Stromzufuhr für die Stromleitung 19 aufgrund eines Komandos der Maschinensteuerung 18 der Antriebsmotor 20 eingeschaltet. Da die Bearbeitungsstelle am Werkstück 1 und damit die Lage des Lünettensitzes 2 bekannt ist, befindet sich das Werkzeug 8 an der hierfür notwendigen Stelle oder wird dorthin gefahren. Ebenfalls wird die Lünette 3 durch entsprechenden Betrieb des Motors 26 in axialer Richtung in die richtige Position für eine Abstützung des Werkstücks 1 gefahren. Die stirnseitige Anlagefläche der Stützelemente 4 soll im Ausführungsbeispiel eine Kontur nach der strichpunktierten Linie in Figur 3 aufweisen. Weiterhin weist in Figur 3 die Linie 6 die Rohlingskontur des Werkstückes 1 in dem Bereich, in dem die Bearbeitung erfolgen soll, auf. Das Drehräumwerkzeug 8 bearbeitet nun zunächst in langsamen Vorschub und mit langsamer Schnittgeschwindigkeit des Werkstückes 1 den in Figur 3 gestrichelt dargestellten Bereich 2, so daß sich die Stirnseite eines jeden Stützelementes 4 dort anlegen und damit das Werkstück 1 abstützen kann. Der radial weiter innen liegende stirnseitige Bereich des Stützelementes 4, mit dem Bezugszeichen 7, ist frei und liegt nicht am Werkstück an. Mit fortschreitender Bearbeitung wandert der Lünettensitz 2 radial immer weiter nach innen auf die Drehachse 24 zu und es wird das Stützelement 4 entsprechend nachgeführt und bleibt damit immer in Anlage am Lünettensitz 2. Mit fortschreitender Bearbeitung wird am Grund des Rohlings eine weitere ringförmige Fläche 7′ zerspant, auf welche in radialer Ricthung die Stützkontur 7 des Stützelementes 4 zuwandert. Sie kommt dort letzendlich zur Anlage, so daß im Bereich der ringförmigen Fläche 7 nunmehr die Abstützung erfolgt, während der Lünettensitz 2 radial einwärts weiter abgearbeitet wird, so daß dort der Kontakt mit den entsprechenden Bereichen des Stützelementes 4 verloren geht, da das Stützelement 4 ja radial nicht weiter nach innen wandern kann, weil ja die Stützkontur 7 des Stützelementes 4 an der ringförmigen Fläche 7′ anliegt.

Es kann also mit dem erfindungsgemäßen Verfahren und der zugehörigen Einrichtung eine lückenlose Abstützung auch bei unterschliedlichsten Konturen vom Rohling bis zum fertigen Werkstück durch eine geeignete Lünette erfolgen. Hierbei kann, je nach gewünschter Kontur des Werkstükkes durchaus im Laufe der Fertigbearbeitung die ringförmige Fläche 7′ radial weiter einwärts wandern, so daß ein weiterer Lünettensitz 5 entsteht, wodurch wiederum ein Wechsel der Abstützflächen im Bereich eines Stützelementens 4 erfolgt, der jedoch völlig stoßfrei abläuft.

Mit der Erfindung gelingt es erstmals, labile Werkstücke durch Drehräumen sicher zu bearbeiten, ohne das das Werkstück von mehreren Werkzeugen in der gleichen Bearbeitungszone umfaßt und bearbeitet werden müßte. Gleichzeitig ist eine solche Bearbeitung von labilen Werkstücken durch Drehräumen bei einem verhältnismäßig einfachen Maschinenaufbau möglich.

Liste der verwendeten Bezugszeichen

| | |
|---|---|
| 1 | Werkstück |
| 2 | Lünettensitz |
| 3 | Lünette |
| 4 | Stützelemente |
| 5 | weiterer Lünettensitz |
| 6 | Rohlingskontur |
| 7 | Stützkontur |
| 7′ | ringförmige Fläche |
| 8 | Drehräumwerkzeug |
| 9 | Strömungsmittelzylinder |
| 10 | Strömungsmittelzylinder |
| 11 | Strömungsmittelzylinder |
| 12 | Leistungsaufnehmer |
| 13 | Drehmelder |
| 14 | Auswerteeinrichtung |
| 15 | Leitung |
| 16 | Leitung |
| 17 | hyd raulischer Schaltkreis |
| 18 | Maschinensteuerung mit Rechner und Speicher |
| 19 | Stromleitung |

| 20 | Motor |
| 21 | Spindelstock |
| 22 | Spindelstock |
| 23 | Bett |
| 24 | Drehachse |
| 25 | Antriebswelle |
| 26 | Motor |
| 27 | Spindel |
| 28 | Mutter |
| 29 | Druckregelventil |
| 30 | Hydraulikpumpe |
| 31 | Ventil |
| 32 | entsperrbares Rückschlagventil |
| 33 | Druckbegrenzungsventil |
| 34 | Ventil |
| 35 | Tank |

**Patentansprüche**

1. Verfahren zum Drehräumen von biegungs- oder schwingungsempfindlichen Werkstücken, dadurch gekennzeichnet, daß an mindestens einer Stelle des Werkstückes (1) von einem Drehräumwerkzeug zunächst ein Lünettensitz (2) angeformt wird, worauf eine zugeordnete Lünette (3) mit ihren Stützelementen (4) angelegt und nachfolgend das Drehräumwerkzeug die Drehräumbearbeitung fortsetzt, wobei die Anformung des Lünettensitzes (2) mindestens solange mit mindestens verlangsamter Schnittgeschwindigkeit und/oder verringertem Vorschub erfolgt, bis die Stützelemente (4) angelegt sind.

2. Verfahren nach Anspruch 1, dadurch gekennzeichnet, daß nach Anformung des Lünettensitzes (2) dieser weiterbearbeitet wird und die Stützelemente (4) dem kleiner werdenden Lünettensitz nachgeführt werden.

3. Verfahren nach einem der Ansprüche 1 oder 2, dadurch gekennzeichnet, daß durch eine fortgesetzte Drehräumbearbeitung im Bereich eines Lünettensitzes (2) ein weiterer Lünettensitz (5) angeformt wird, wonach Stützelemente (4) an diesen weiteren Lünettensitz angelegt werden.

4. Verfahren nach Anspruch 3, dadurch gekennzeichnet, daß mindestens während einer kurzen Übergangsphase Stützelemente (4) sowohl am zuerst angeformten (2) als auch am weiteren Lünettensitz (5) anliegen.

5. Verfahren nach einem der Ansprüche 1 bis 4, dadurch gekennzeichnet, daß zunächst zwei ringförmige Flächen (2) und eine im Durchmesser kleinere, zwischen den genannten Flächen angeordnete weitere ringförmige Fläche angeformt und Stützelemente an die erstgenannten ringförmigen Flächen angelegt werden, bevor die weitere Drehräumbearbeitung erfolgt.

6. Verfahren nach Anspruch 5, dadurch gekennzeichnet, daß die Anformung der mittleren ringförmigen Fläche nach dem Anlegen der Stützelemente (4) und mit normaler Bearbeitungsgeschwindigkeit erfolgt.

7. Verfahren nach einem der Ansprüche 1 bis 6, dadurch gekennzeichnet, daß die auf die Stützelemente (4) in deren Bewegungsrichtung einwirkenden Komponenten der Schnittkraft ermittelt und die Stützelemente mit entsprechender Gegenkraft in Anlage am Lünettensitz (2,5) gehalten werden.

8. Maschine zur Durchführung des Verfahrens nach den Ansprüchen 1 bis 7, mit einer Einrichtung für die Aufnahme und den Drehantrieb eines durch Drehräumen zu bearbeitenden Werkstückes, mindestens einem in Arbeitskontakt mit dem Werkstück bringbaren Drehräumwerkzeug, einer Einrichtung für den Antrieb des Drehräumwerkzeugs sowie mit einer Maschinensteuerung, dadurch gekennzeichnet, daß an der Maschine mindestens eine Lünette (3) mit an auf der Drehräum-Maschine vorbearbeitete Oberflächen des Werkstücks (1) anlegbaren Stützelementen (4) angeordnet ist wobei für die Bearbeitung im Bereich der Lünette am Umfang des Werkstückes nur ein Drehräumwerkzeug vorgesehen ist, wobei das Drehräumwerkzeug (8) Schneidkanten aufweist zur Herstellung mindestens eines Lünettensitzes (2,5,7).

9. Maschine nach Anspruch 8, dadurch gekennzeichnet, daß für jedes Stützelement (4) Mittel (9,10,11) zum Nachführen des Stützelementes (4) mit vorbestimmter oder vorbestimmbarer Kraft vorgesehen sind.

10. Maschine nach Anspruch 9, dadurch gekennzeichnet, daß Mittel (17) zur Einstellung oder Regelung der Kraft für die Stützelemente (4) vorgesehen sind.

11. Maschine nach Anspruch 10, dadurch gekennzeichnet, daß Mittel (12,13,14,18) zur Ermittlung der Belastung des Werkstückes (1) oder Werkzeuges (8) vorgesehen sind, die mit der Maschinensteuerung (18) verbunden sind, die ihrerseits mit den Mitteln (17) zur Einstellung oder Regelung der Kraft für die Stützelemente (4) verbunden ist.

12. Maschine nach Anspruch 10, dadurch gekennzeichnet, daß die Mittel (9,10,11) zum Nachführen der Stützelemente (4) mit den Mitteln (17) zur Einstellung oder Regelung der Kraft für die Stützelemente (4) verbunden sind, derart, daß alle Mittel (9,10,11) zum Nachführen der Stützelemente (4) gemeinsam und in gleicher Weise eingestellt oder geregelt werden.

13. Maschine nach Anspruch 10, dadurch gekennzeichnet, daß die einem Stützelement (4) zugeordneten Mittel (9,10,11) zum Nachführen jeweils unabhängig von den entsprechenden anderen Mitteln mit den Mitteln (17) zur Einstellung oder Regelung der Kraft für die Stützelemente (4) verbunden ist, derart, daß die jedem einzelnen Stützelement (4) zugeordneten Mittel (9,10,11) unabhängig von allem anderen eingestellt oder geregelt werden können.

14. Maschine nach einem der Ansprüche 8 bis 10, dadurch gekennzeichnet, daß die Mittel zum Nachführen der Stützelemente als Strömungsmittelzylinder (9,10,11) ausgebildet sind.

15. Maschine nach Anspruch 14, dadurch gekennzeichnet, daß die Mittel zur Einstellung oder Regelung der Kraft für die Stützelemente (4) als hydraulischer Schaltkreis (17) für die Störmungsmittelzylinder (9,10,11) ausgebildet sind.

16. Maschine nach Anspruch 15, dadurch gekennzeichnet, daß ein hydraulischer Schaltkreis (17) für alle Zylinder gemeinsam oder für jeden einzelnen Zylinder vorgesehen ist.

## Claims

1. Method for the rotary broaching of bending-sensitive or vibration-sensitive work-pieces, characterised in that at at least one position of the work-piece (1) a steady rest seat (2) is first shaped by a rotary broaching tool, whereafter an associated steady rest (3) with its support elements (4) is set in place and subsequently the rotary broaching tool continues the rotary broaching process, wherein the shaping of the steady rest seat (2) is effected with at least retarded cutting speed and/or reduced thrust for at least until the support elements (4) are set in place.

2. Method according to claim 1, characterised in that after shaping of the steady rest seat (2) this seat is further machined and the support elements (4) are reset to the smaller steady rest seat which is created.

3. Method according to one of claims 1 or 2, characterised in that by means of a continuing rotary broaching process in the region of a steady rest seat (2) a further steady rest seat (5) is formed, whereafter support elements (4) are set in place against this further steady rest seat.

4. Method according to claim 3, characterised in that at least during a short transition phase support elements (4) are in contact both with the first formed steady rest seat (2) and also with the further steady rest seat (5).

5. Method according to one of claims 1 to 4, characterised in that initially two annular surfaces (2) are formed together with a further annular surface of smaller diameter arranged between the said surfaces and support elements are set in place against the first-mentioned annular surfaces, before the further rotary broaching process takes place.

6. Method according to claim 5, characterised in that the forming of the middle annular surface is effected after the setting in place of the support elements (4) and at normal operating speed.

7. Method according to one of claims 1 to 6, characterised in that the components of the cutting force acting on the support elements (4) in their direction of movement are determined and the support elements are maintained in contact with the steady rest seat (2,5) with corresponding opposing force.

8. Machine for carrying out the method according to claims 1 to 7, comprising an apparatus for the receiving and for the rotary driving of a work-piece which is to be machined by rotary broaching, at least one rotary broaching tool which can be brought into working contact with the work-piece, means for driving the rotary broaching tool, and machine control means, characterised in that on the machine is arranged at least one steady rest (3) with support elements (4) which can be set against surfaces of the work-piece (1) pre-machined on the rotary broaching machine, wherein only one rotary broaching tool is provided for the machining in the region of the steady rest at the periphery of the work-piece, and wherein the rotary broaching tool (8) has cutting edges for producing at least one steady rest seat (2,5,7).

9. Machine according to claim 8, characterised in that for each support element (4) means (9,10,11) are provided for resetting the support element (4) with predetermined or predeterminable force.

10. Machine according to claim 9, characterised in that means (17) are provided for setting or regulating the force for the support elements (4).

11. Machine according to claim 10, characterised in that means (12,13,14,18) are provided for determining the loading of the work-piece (1) or tool (8), said means being connected to the machine control means (18) which for its part is connected to the means (17) for setting or regulating the force for the support elements (4).

12. Machine according to claim 10, characterised in that the means (9,10,11) for resetting the support elements (4) are connected to the means (17) for setting or regulating the force for the support elements (4), such that all means (9,10,11) for resetting the support elements (4) are set or regulated jointly and in the same manner.

13. Machine according to claim 10, characterised in that the means (9,10,11) associated with a support element (4) for the resetting is connected independently of the corresponding other means with the means (17) for setting or regulating the force for the support elements (4), such that the means (9,10,11) associated with each individual support element (4) can be set or regulated independently of all other said means.

14. Machine according to one of claims 8 to 10, characterised in that the means for resetting the support elements are formed as fluid-actuated cylinders (9,10,11).

15. Machine according to claim 14, characterised in that the means for setting or regulating the force for the support elements (4) comprises hydraulic circuitry (17) for the fluid-actuated cylinders (9,10,11).

16. Machine according to claim 15, characterised in that a hydraulic circuit (17) is provided for all cylinders jointly or for each individual cylinder.

**Revendications**

1. Procédé de brochage rotatif de pièces sensibles à la flexion ou aux vibrations, caractérisé en ce qu'à un ou plusieurs endroits de la pièce à usiner (1), un outil de brochage rotatif forme tout d'abord un siège de lunette (2) sur lequel une lunette associée (3) est appliquée avec ses éléments d'appui (4), puis l'outil de brochage rotatif poursuit l'usinage par brochage rotatif, la formation du siège de lunette (2) ayant lieu, à une vitesse de coupe au moins ralentie et/ou suivant une avance réduite, au moins jusqu'à ce que les éléments d'appui (4) soient appliqués.

2. Procédé selon la revendication 1, caractérisé en ce que, une fois le siège de lunette (2) formé, son usinage continue et les éléments d'appui (4) suivent le siège de lunette qui diminue.

3. Procédé selon l'une des revendications 1 ou 2, caractérisé en ce qu'un second siège de lunette (5) est formé grâce à la poursuite de l'usinage par brochage rotatif dans la zone d'un siège de lunette (2), après quoi des éléments d'appui (4) sont appliqués contre ce second siège de lunette.

4. Procédé selon la revendication 3, caractérisé en ce que, au moins pendant une courte phase de transition, des éléments d'appui (4) sont appliqués non seulement contre le siège de lunette (2) formé en premier, mais également contre le second siège de lunette (5).

5. Procédé selon l'une des revendications 1 à 4, caractérisé en ce que deux surfaces annulaires (2) et une seconde surface annulaire, de diamètre inférieur et disposée entre ces surfaces, sont tout d'abord formées et des éléments d'appui sont appliqués contre les surfaces annulaires mentionnées en premier avant que l'usinage ultérieur par brochage rotatif ne se fasse.

6. Procédé selon la revendication 5, caractérisé en ce que la formation de la surface annulaire du milieu se fait après l'application des éléments d'appui (4) et à une vitesse d'usinage normale.

7. Procédé selon l'une des revendications 1 à 6, caractérisé en ce que les composantes de l'effort de coupe agissant sur les éléments d'appui (4) dans le sens de leur déplacement sont calculées et les éléments d'appui sont maintenus appliqués contre le siège de lunette (2, 5) grâce à une force antagoniste correspondante.

8. Machine pour mettre en oeuvre le procédé selon les revendications 1 à 7, comportant un dispositif pour recevoir et entraîner en rotation une pièce à usiner par brochage rotatif, un ou plusieurs outils de brochage rotatif aptes à être amenés en contact opérationnel avec la pièce à usiner, un dispositif pour entraîner l'outil de brochage rotatif et une commande de machine, caractérisée en ce qu'il est prévu, sur la machine, une ou plusieurs lunettes (3) comportant des éléments d'appui (4) aptes à être appliqués contre des surfaces de la pièce (1) pré-usinées sur la machine de brochage rotatif, un seul outil de brochage rotatif étant prévu pour l'usinage dans la zone de la lunette, sur la circonférence de la pièce, et l'outil de brochage rotatif (8) possédant des arêtes coupantes pour réaliser un ou plusieurs sièges de lunettes (2, 5, 7).

9. Machine selon la revendication 8, caractérisée en ce qu'il est prévu, pour chaque élément d'appui (4), des moyens (9, 10, 11) permettant à l'élément d'appui (4) de suivre suivant une force prédéfinie ou apte à être prédéfinie.

10. Machine selon la revendication 9, caractérisée en ce qu'il est prévu des moyens (17) pour le réglage ou la régulation de la force pour les éléments d'appui (4).

11. Machine selon la revendication 10, caractérisée en ce qu'il est prévu des moyens (12, 13, 14, 18) pour calculer la sollicitation de la pièce (1) ou de l'outil (8), lesquels moyens (12, 13, 14, 18) sont reliés à la commande de machine (18) qui est elle-même reliée aux moyens (17) destinés au réglage ou à la régulation de la force pour les éléments d'appui (4).

12. Machine selon la revendication 10, caractérisée en ce que les moyens (9, 10, 11) permettant aux éléments d'appui (4) de suivre sont reliés aux moyens (17) destinés au réglage ou à la régulation de la force pour les éléments d'appui (4), de telle sorte que tous lesdits moyens (9, 10, 11) permettant aux éléments d'appui (4) de cuivre sont réglés en commun et de la même manière.

13. Machine selon la revendication 10, caractérisé en ce que les moyens (9, 10, 11) associés à un élément d'appui (4) pour lui permettre de suivre sont reliés respectivement, indépendamment des autres moyens correspondants, aux moyens (17) destinés au réglage ou à la régulation de la force pour les éléments d'appui (4), de telle sorte que lesdits moyens (9, 10, 11) associés à chaque élément d'appui (4) individuel peuvent être réglés indépendamment de tout le reste.

14. Machine selon l'une des revendications 8 à 10, caractérisée en ce que les moyens permettant aux éléments d'appui de suivre sont conçus comme des vérins actionnés par fluide (9, 10, 11).

15. Machine selon la revendication 14, caractérisée en ce que les moyens prévus pour le réglage ou la régulation de la force pour les éléments d'appui (4) sont conçus comme un circuit de commutation hydraulique (17) pour les vérins actionnés par fluide (9, 10, 11).

16. Machine selon la revendication 15, caractérisée en ce qu'il est prévu un circuit de commutation hydraulique (17) commun pour tous les vérins ou pour chaque vérin individuel.

Fig. 1

Fig. 3

Fig 2